# FASCICULE DE BREVET EUROPEEN

(11) **EP 0 427 642 B1**
(45) Date de publication et mention de la délivrance du brevet: **12.01.1994**
(21) Numéro de dépôt: 90420460.9
(22) Date de dépôt: 25.10.1990
(51) Int. Cl.: H02K 41/025, H02K 9/00

(54) **Dispositif de refroidissement pour inducteur de moteur linéaire**
Einrichtung zur Kühlung eines Induktors in einem Linearmotor
Cooling device for the inductor of a linear motor

(30) Priorité: 30.10.1989 FR 8914620
(43) Date de publication de la demande: 15.05.1991
(73) Titulaire: CONSTRUCTIONS ELECTRIQUES DU CENTRE CELDUC Société Anonyme, F-42290 Sorbiers(Loire) (FR)
(72) Inventeur: Combette, Marc, F-42480 La Fouillouse (Loire) (FR)
(74) Mandataire: Perrier, Jean-Pierre

(56) Documents cités:
- FR-A- 2 142 871
- FR-A- 2 330 189
- FR-A- 2 382 792
- FR-A- 2 497 420

## Description

L'invention est relative aux moteurs linéaires dont l'inducteur comprend un noyau axial prismatique entouré par des bobines qui, formées de galettes séparées par des isthmes magnétiques, sont juxtaposées par l'une de leurs faces à l'âme d'un support en U, en matériau bon conducteur de l'électricité, constituant écran contre les fuites magnétiques, tandis que l'induit a une section transversale en U coiffant l'inducteur.

Un tel moteur est décrit dans les brevets français 2 142 871 2 330 189, et 2 382 792.

Ce dernier document décrit également un agencement particulier des éléments du moteur et des moyens assurant son refroidissement dans le but de réduire ses dimensions et son coût et d'accroitre son rendement. Selon cet agencement, chaque galette de bobine, encadrée de deux isthmes magnétiques, est espacée de sa voisine par un écarteur comportant un canal de refroidissement annulaire. Ce canal communique avec des fentes du support écran, fentes débouchant elles-mêmes dans des chambres, respectivement centrale et latérales, délimitées dans ce support par des cloisons de séparation. Au moins l'une de ces chambres est raccordée à des moyens lui envoyant de manière forcée un fluide de refroidissement. En outre, le support écran est associé à des profilés de refroidissement sur lequel passe le fluide de refroidissement.

Avec cet agencement, le fluide de refroidissement, qui est en général constitué par de l'air, pénètre dans l'une des chambres du support écran, circule dans les écarteurs pour refroidir les galettes des bobines, puis revient dans les autres chambres du support écran avant d'être évacué, avec le flux complémentaire de refroidissement des profilés du support.

Si ce circuit donne satisfaction, il met en oeuvre des moyens de séparation des chambres, de répartition et de canalisation des flux qui sont peu compatibles avec une fabrication en série et interviennent de manière sensible sur le coût final du moteur, tant par leur conception que par leur condition de montage.

La présente invention a pour but de fournir un dispositif de refroidissement qui, tout en étant moins onéreux et facile à monter, aussi bien pour une construction unitaire que pour une construction en série, procure un meilleur refroidissement et améliore le rendement.

Dans le dispositif, selon l'invention, chacun des écarteurs de galettes, d'une part, est réalisé en matière synthétique moulée, d'autre part, présente une paroi intérieure et une paroi extérieure formant un canal en C fermé communiquant, par des bouches ménagées dans sa paroi extérieure et aux extrémités du C, avec les ouvertures ménagées dans l'écran support, et de plus, possède, entre les deux bouches, une rainure de positionnement de la base d'une barrette longitudinale en matière synthétique, tandis que l'âme du support écran est coiffé, sur son côté tourné vers le noyau axial, par un couvercle isolant en matière synthétique muni, d'un côté, de puits s'engageant dans les ouvertures de cette âme et, de l'autre côté, de deux rainures longitudinales parallèles et espacées pour le positionnement du sommet d'une paire de barrettes, et que chacune des barrettes, constituant cloison de séparation dans une chambre intermédiaire ménagée entre le couvercle isolant et la bobine, est munie à chacune de ses extrémités de moyens de positionnement aptes à coopérer avec des moyens complémentaires ménagés dans des flasques en matière synthétique délimitant chaque bobine.

Dans ce dispositif, les écarteurs, le couvercle isolant, les barrettes longitudinales et les flasques sont réalisés en matière synthétique moulée, présentent des dimensions régulières leur permettant de s'assembler aisément par emboitement et de former des cloisons et parois canalisant le flux de refroidissement, tout en assurant l'isolation électrique recherchée sans recours à aucun autre moyen extérieur. Le recours à une matière synthétique ayant de bonnes caractéristiques d'isolation, permet d'améliorer la tenue mécanique en température, de réduire les épaisseurs des parois des éléments et, en conséquence, de réduire les dimensions de l'inducteur, tout en améliorant ses caractéristiques magnétiques.

De plus, le recours à des écarteurs en matière synthétique associés à des tôles plastifiées sur leurs grandes faces, permet de supprimer toutes feuilles isolantes d'intercalage entre les éléments d'une bobine, ce qui facilite le montage et surtout améliore les transferts thermiques entre chaque galette et les canaux juxtaposés du circuit de refroidissement.

Enfin, l'isolation du support écran par un couvercle indépendant en remplacement d'une couche isolante formée in situ, permet de contrôler l'isolement obtenu par le couvercle avant son montage sur l'écran et si cet isolement est défaillant de remplacer le couvercle aisément sans avoir à rebuter l'écran.

Dans une forme d'exécution de l'invention, les ailes du support écran en U sont tournées à l'opposé du noyau axial et forment, avec deux cloisons parallèles à elles et interposées entre l'âme du support et une embase isolante opposée à cette âme, une chambre centrale d'arrivée du fluide de refroidissement, chambre communiquant avec des ouvertures de cette embase, et deux chambres latérales de sortie de ce fluide, tandis que les éléments de radiateur associés au support écran sont constitués par des ailettes fixées contre la face interne de chaque aile du support écran, dans la chambre latérale correspondante, et que les bouches de chaque écarteur sont décalées latéralement par rapport à son plan médian,afin d'assurer la communication avec la chambre centrale et l'une des chambres latérales, quel que soit le sens de montage donné à l'écarteur.

Avec cet agencement, le support écran constitue une première chambre de distribution qui, en amont de la bobine, canalise l'arrivée de fluide de refroidissement et l'oriente, par sa chambre centrale, en direction des écarteurs, tandis que chacune de ses chambres latérales reçoit le fluide réchauffé par circulation dans les écarteurs, fluide qui est encore utilisé pour refroidir le support écran en passant sur les ailettes de refroidissement accolées à ses parois latérales. La disposition particulière des bouches des écarteurs permet d'utiliser un même type d'écarteur, quel que soit son sens de montage, c'est à dire permet d'alterner les écarteurs de manière que la bouche de sortie de chacun d'eux communique avec une chambre latérale qui est différente de celle avec laquelle communiquent les bouches de sortie des écarteurs juxtaposés. Une telle disposition réduit le coût de fabrication des écarteurs et simplifie le montage puisqu'il suffit de retourner les écarteurs au montage pour obtenir l'inversion des sens de circulation recherchée.

D'autres caractéristiques et avantages ressortiront de la description qui suit en référence au dessin schématique annexé représentant à titre d'exemple non limitatif une forme d'exécution de ce dispositif de refroidissement.
Figure 1 est une vue en coupe transversale suivant I-I de figure 4 de l'ensemble du moteur,
Figure 2 est une vue partielle en coupe longitudinale suivant II-II de figure 1 de l'une des bobines avec ses moyens de fixation,
Figure 3 est une vue partielle montrant, à échelle agrandie, les différents éléments associés à une bobine pour former une chambre intermédiaire de distribution,
Figure 4 est une vue partielle en plan par dessus et en coupe suivant IV-IV de figure 2,
Figure 5 est une vue de côté en coupe partielle suivant V-V de figure 3 montrant, plus en détails, la structure d'un écarteur,
Figure 6 est une vue en perspective montrant les différents composants de l'inducteur.

De façon connue, ce moteur linéaire est constitué par un induit et par un inducteur, désignés respectivement par A et B. Dans la forme d'exécution représentée, l'induit A présente en section transversale la forme générale d'un U et est composé d'une partie magnétique 2 recouverte intérieurement d'une partie conductrice 3. L'inducteur B est composé d'un noyau axial prismatique 4 entouré par des bobines désignées de façon générale par 5 dont l'une des faces, et n l'occurence celle supérieure, est juxtaposée à l'âme 6a d'un support de section en U, constituant écran magnétique et désigné pour la suite de la description par l'expression "support écran 6". Ce dernier est réalisé en matériau conducteur de la chaleur.

Le noyau 4 de section carrée est avantageusement composé de barres métalliques 4a de faible section réparties en rangées et colonnes régulières et immobilisées, après mise en forme rectiligne ou curviligne dans le sens de leur longueur, par une couche de matière synthétique 4b surmoulée sur elles.

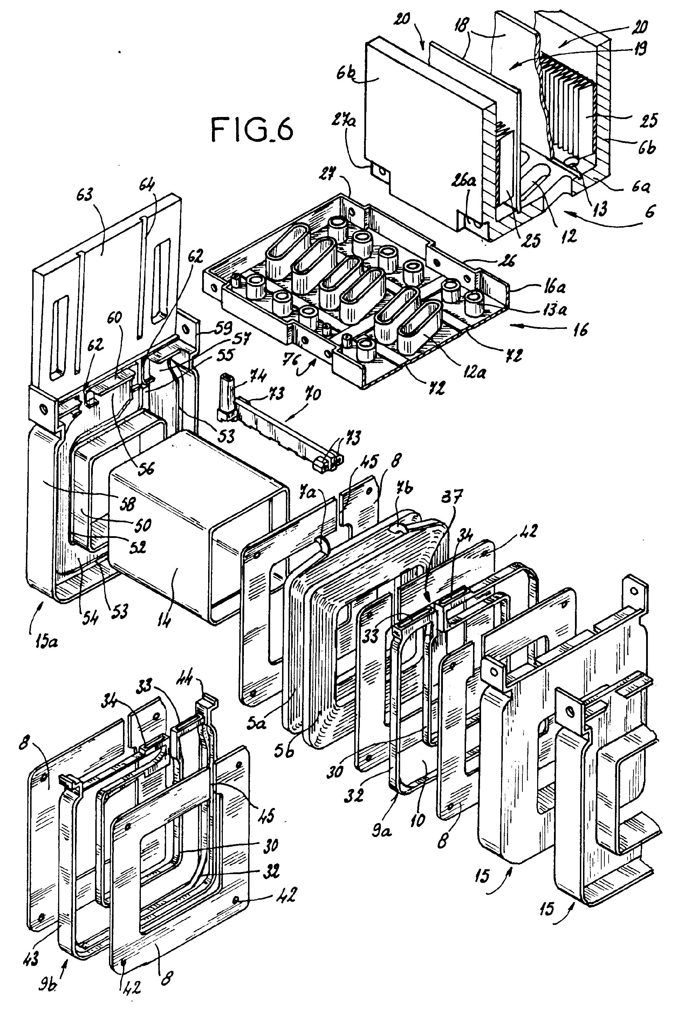

Chaque bobine 5 est, de façon connue, composée de galettes de fils conducteurs de l'électricité guipés 5a et 5b, reliées deux à deux par un conducteur de liaison, non représenté, de manière à former des galettes doubles, du type représenté à la figure 6. Chacune des galettes d'une galette double est solidaire d'une borne 7a ou 7b permettant d'assurer sa connection électrique. Chaque galette est associée sur chacune de ses faces transversales à une tôle feuilletée 8 constituant isthme magnétique et qui est, elle même, séparée de la tôle juxtaposée à la galette voisine par un écarteur, désigné de façon générale par 9. La tôle 8 est recouverte, au moins sur sa face tournée à l'extérieur de l'écarteur, par une couche de matière synthétique d'isolation. Quant à l'écarteur,il délimite un canal annulaire de refroidissement 10 raccordé à des ouvertures 12 et 13 ménagées dans l'âme 6a du support écran 6.

Comme le montre la figure 6, chaque bobine 5 constituée par l'empilage de plusieurs galettes doubles dont les galettes sont espacées par des tôles 8 avec écarteurs 9, n'est pas montée directement sur le noyau 4, mais sur un manchon 14 en matière isolante interposée entre l'alésage interne des éléments de la bobine et ledit noyau. Chaque bobine est délimitée longitudinalement, et de chaque côté, par un flasque, intermédiaire 15 ou d'extrémité 15a. Plusieurs bobines, et par exemple trois, sont ainsi fixées par les flasques intermédiaires 15 et par les flasques d'extrémité 15a à un même tronçon d'écran support 6, tronçon dont l'âme est coiffée par un même couvercle 16 en matériau isolant. L'ensemble, ainsi obtenu, forme un demi pôle du moteur linéaire. En outre, chaque bobine de cet ensemble est connectée en série avec l'une des bobines d'un autre demi pôle pour constituer l'une des phases de ce moteur.

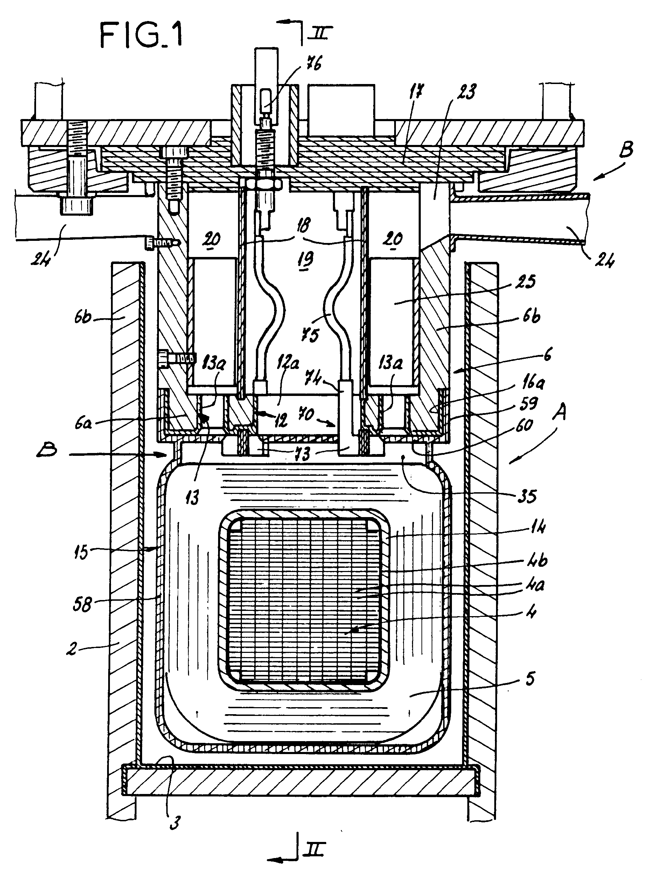

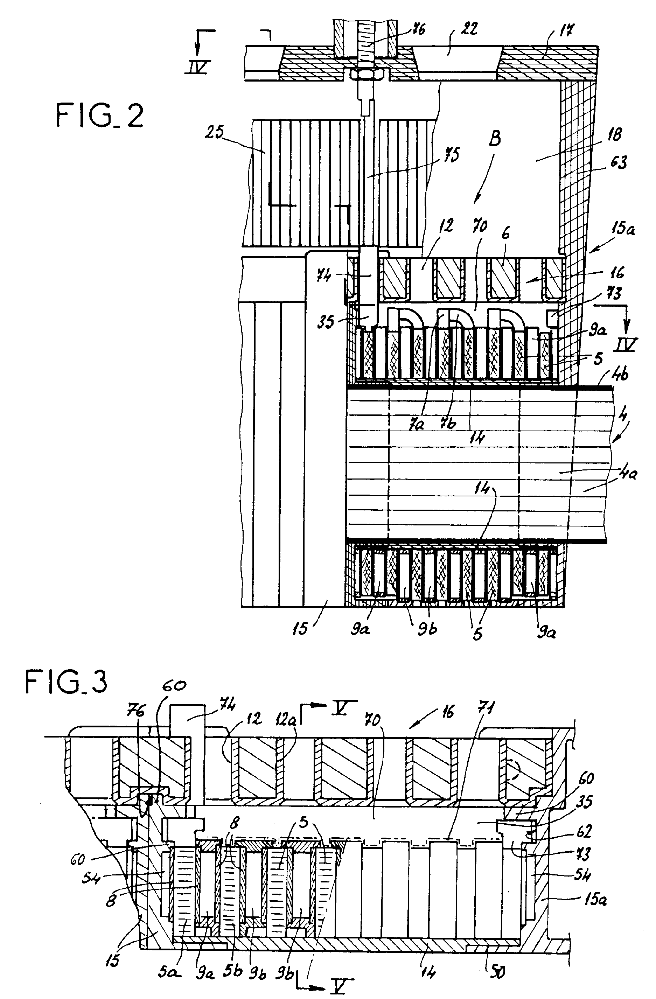

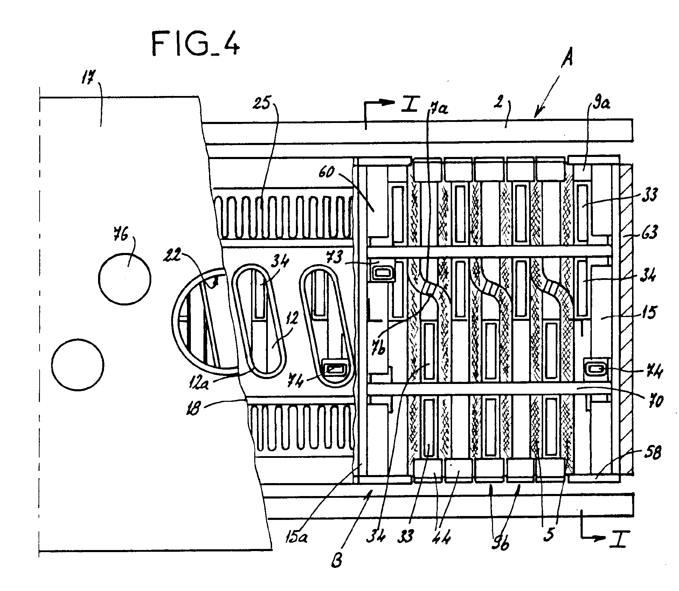

Dans la forme d'exécution représentée aux figures 1, 5 et 6 le support écran 6 présente, en section transversale, la forme d'un U dont les ailes 6b sont tournées à l'opposé du noyau axial 4 et délimitent entre elles une cavité qui est obturée en partie supérieure, par une embase en matériau isolant 17 (figure 1), et aux extrémités par les parois 63 des flasques 15A. Cette cavité est divisée intérieurement par deux cloisons longitudinales 18, en trois compartiments, à savoir un compartiment central d'entrée 19, et deux compartiments latéraux de sortie 20. Le compartiment 19 communique par des ouvertures 22, visibles en particulier aux figures 2 et 4, avec une source de fluide de refroidissement sous pression et, par exemple, une source d'air forcée. Les compartiments latéraux de sortie 20 communiquent avec l'extérieur, soit par des ouvertures ménagées directement dans l'embase 17, soit par des ouvertures 23 ménagées dans les ailes 6b du support écran 6 et communiquant avec des tubulures d'échappement 24 (figure 1).

La figure 1 montre que chaque compartiment latéral 20 sert également de logement à des ailettes de refroidissement 25 saillant de peignes fixés sur la face interne des ailes 6b du support écran 6. Ces ailettes sont disposées dans la trajectoire de sortie du fluide de refroidissement s'échappant par les ouvertures 13 de l'âme.

La figure 1 montre également que les ouvertures centrales 12 et latérales 13 de l'âme 6 sont coiffées par des puits 12a et 13a saillants du couvercle isolant 16, couvercle muni d'une jupe 16a ceinturant l'âme comme représenté à la figure 1.

La figure 6 montre que cette jupe 16a comporte localement des défoncements 26 et 27 coiffant des défoncements respectivement 26a et 27a ménagés dans le support écran 6.

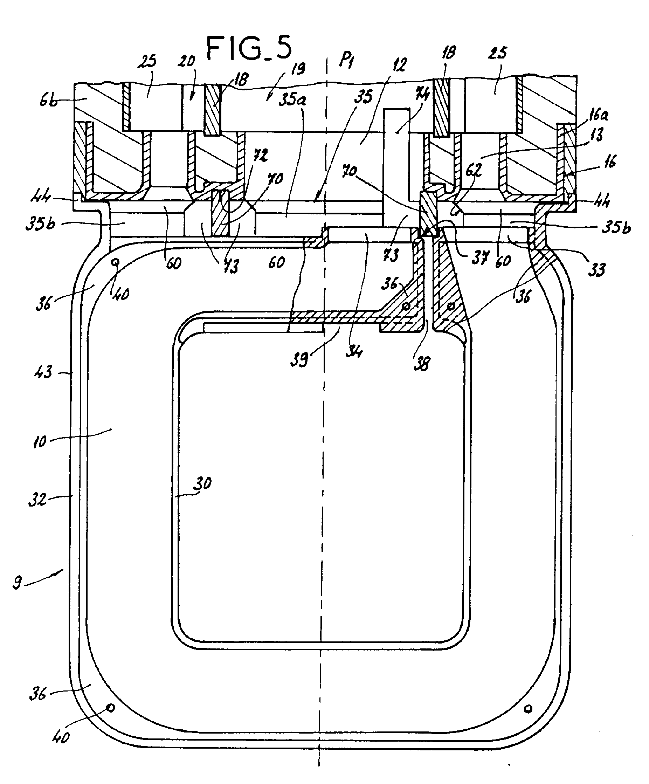

Chacun des écarteurs 9a-9b formant avec deux isthmes magnétiques 8 une dent creuse ventilée, est constitué par une pièce en matière synthétique moulée et présente, comme montré aux figures 5 et 6, une paroi intérieure 30 et une paroi extérieure 32 délimitant entre elles un canal 10 ayant la forme d'un C fermé. Ce canal débouche à l'extérieur par des bouches, respectivement, extérieure 33 et intérieure 34. Comme le montre la figure 5, les bouches 34 et 33 sont décalées par rapport au plan médian P1 de l'écarteur afin que le même écarteur puisse alternativement être disposé avec ses bouches d'un côté ou de l'autre côté du plan P1. Cette figure montre également que les bouches débouchent au dessous de l'âme 6a de l'écran support 6 dans une chambre dite intermédiaire et désignée de façon générale par 35.

Les parois intérieures et extérieures 30 et 32 de chaque écarteur 9a-9b sont munies, sur leurs faces en vis à vis délimitant le canal 10 et dans les zones de changement de direction de celui-ci d'excroissances 36 canalisant le fluide et évitant la formation de courants tourbillonnaires dans les angles. Les deux bouches 33 et 34 sont séparées par une rainure 37 qui est prolongée par une fente 38 traversant la paroi intérieure 30. Cette dernière sert au passage du conducteur de liaison entre les deux galettes d'une galette double,lors du montage d'un écarteur entre ces deux galettes. En outre, et comme le montre plus en détails la figure 5, la paroi interne 30 est munie, sur l'une de ses côtés, d'une rainure transversale oblique 39 servant de logement au conducteur de liaison entre les deux galettes, lorsque l'écarteur 9a-9b est dans sa position définitive entre les deux galettes. Enfin, au moins dans les écarteurs 9a, les excroissances 36 sont munies localement de têtons longitudinaux 40 aptes à coopérer avec des perçages 42 ménagés, comme montré figure 6, dans chacune des tôles 8 constituant les isthmes magnétiques, pour assurer le positionnement de ces isthmes par rapport à l'écarteur.

L'écarteur 9a décrit ci-dessus est destiné à être disposé aux extrémités de la bobine, dans les flasques 15a ou 15. Il est associé à des écarteurs 9b, de même forme et structure que lui mais comportant en plus une nervure périphérique 43 renforçant sa paroi extérieure et lui donnant, comme le montrent les figures 6 et 3, une section transversale en T. Une telle nervure améliore le positionnement des tôles 8, mais permet aussi de positionner les galettes par rapport à l'écarteur. Cette nervure se prolonge au dessus des ouvertures 33 et 34 pour renforcer la chape 44 utilisée pour positionner l'écarteur 9a-9b, par rapport au couvercle isolant 16.

Comme le montre la figure 6, chacune des tôles feuilletées 8 forme, en vue de côté, un anneau carré dont l'un des côtés est fendu en 45. Cette fente est utilisée pour le passage du conducteur de liaison de deux galettes lors de l'introduction de la tôle 8 dans l'intervalle entre les deux galettes d'une galette double.

Chacun des flasques 15 ou 15a comporte, (figure 6), en saillie de sa face faisant vis à vis à la bobine avec laquelle il coopère, d'une part, un mandrin 50 de section carrée apte à être traversé par le noyau magnétique 4 et à recevoir par emmanchement l'extrémité du manchon 14, d'autre part et autour de ce mandrin, deux nervures respectivement intérieure 52 et extérieure 53, délimitant entre elles un canal en C 54 similaire à celui délimité dans les écarteurs et, enfin, des butées 55 de positionnement de l'isthme magnétique 8 correspondant. Le canal 54, délimité entre la paroi diamétrale du flasque correspondant et la tôle feuilletée 8,communique par des ouvertures 56 et 57 avec la chambre intermédiaire 35 précédemment décrite, c'est à dire avec l'intervalle formé entre le sommet de la bobine et l'âme isolé du support écran 6. La paroi diamétrale du flasque est également solidaire d'une jupe 58 apte à entourer la bobine sur trois côtés et s'étendant au-delà de la face supérieure de cette bobine pour former une chape de fixation 59. Les deux ailes de cette chape sont reliées par une traverse 60 comportant localement des mortaises 62 dont l'utilité sera précisée plus loin.

Comme le montre la figure 6, chaque flasque d'extrémité 15a comporte, en plus des éléments précédemment décrits, une paroi transversale 63 s'étendant au-delà de la chape 59 et constituant moyen d'obturation des extrémités du support écran 6, comme le montre la figure 2. Cette paroi comporte des rainures 64 pour le positionnement des cloisons 18.

Les écarteurs 9a-9b, le manchon 14, les flasques 15 et 15a et le couvercle isolant 16 sont réalisés par moulage-injection d'une même matière synthétique, choisie pour ses propriétés d'isolation électrique et sa stabilité thermique, mais aussi pour sa stabilité dimensionnelle et par exemple, dans un compound à base de polysulfure de phénylène, de fibres de verre et de charges minérales. Grâce à leur mode d'exécution, les différents composants du dispositif de refroidissement ont des caractéristiques dimensionnelles stables favorisant leur montage et leur assemblage avec des emboitements.

La figure 3 montre d'ailleurs, à l'état assemblé, une bobine composée d'une succession de pièces en matière synthétique intercalées entre des galettes et des tôles 8 formant isthmes magnétiques, à savoir, en allant de la gauche vers la droite, un flasque 15, une tôle 8, une galette 5a, un écarteur 9a, positionnant deux tôles 8, une autre galette 5b, un écarteur 9b positionnant deux tôles 8 et ainsi de suite jusqu'à l'autre flasque 15a. Chaque écarteur est positionné sur le manchon 14 et, par sa chape 44 sur le couvercle isolant 16, et chaque flasque est fixé par ses chapes 59 sur le défoncement 26 ou 27 du couvercle isolant 16 pour former une structure rigide.

De l'explication qui précède, il ressort que le montage des différents éléments s'effectue très aisément et très facilement, sans qu'il soit nécessaire de recourir à d'autres moyens de liaisons exceptés ceux nécessaires à la fixation des flasques sur le support écran 6.

Lorsque les différents éléments constitutifs d'une bobine sont assemblés, mais avant mise en place du support écran 6, l'ensemble ainsi obtenu est recouvert par une couche 71 (figure 3) de résine synthétique assurant entre autres l'étanchéité du montage, c'est à dire supprimant toutes fuites d'air dans les plans de joints entre tôles, écarteurs et bobines. Ensuite, il est procédé au positionnement de deux barrettes longitudinales 70 entre ladite bobine et le couvercle isolant 16. Comme le montre la figure 4, chacune des barrettes 70 est affectée, à l'une des deux séries d'écarteurs, à savoir à la série comportant toutes les bouches disposées d'un même côté du plan médian de l'inducteur. Cette barrette est positionnée par sa base dans les rainures 37 formées entre les bouches 33 et 34 de chaque écarteur 9a-9b, mais aussi par engagement de son sommet dans une rainure longitudinale 72 formée dans l'âme du couvercle isolant 16.

Comme le montrent les figures 3 à 6, à chacune de ses extrémités, chaque barrette est munie d'excroissances latérales 73 formant des tenons aptes à s'engager dans les mortaises 62 ménagées dans les flasques 15 et 15a. De plus, chaque barrette est munie à l'une de ses extrémités d'un canon tubulaire 74 saillant vers le haut et perpendiculairement à sa direction longitudinale. Ce canon est destiné à servir au guidage et au passage du conducteur 75 reliant l'une des bornes de la bobine à une bougie de connexion 76 traversant l'embase 17 comme montré à la figure 2.

Il est évident que les barrettes 70 sont mises en place après que les bornes 7a et 7b de chacune des galettes doubles aient été connectées aux extrémités correspondantes des autres galettes doubles.

La figure 3 montre que le couvercle isolant 16 est muni de rainures transversales 76 de positionnement des traverses 60 des flasques 15. Cet emboitement constitue aussi moyen d'obturation extrême de la chambre intermédiaire 35 associée à la bobine disposée entre les deux flasques.

Dans ces conditions, et comme le montre la figure 5, les deux barrettes 70 forment deux cloisons longitudinales divisant la chambre intermédiaire 35 en trois compartiments, à savoir un compartiment central 35a, et deux compartiments latéraux 35b. Le compartiment central 35a met en communication la chambre centrale 19 du support écran 6 avec les bouches d'entrée 34 des écarteurs mais aussi avec les ouvertures 56 des canaux 54 des flasques. Les compartiments latéraux 35b assurent la communication des bouches latérales 33 des écarteurs et des ouvertures latérales 57 des flasques avec les chambres latérales 20 du support isolant 6 et permettent ainsi au flux d'air, venant de refroidir chacune des dents magnétiques creuses,de pénétrer dans le support isolant pour longer les ailettes 25 avant de s'échapper par un collecteur, soit directement à l'extérieur soit à travers un échangeur thermique.

Les barrettes 70 qui sont réalisées dans la même matière synthétique que celle constituant les écarteurs, les flasques et le couvercle isolant 16, assurent donc une fonction de distribution du flux d'air, jusqu'alors réalisée par des prolongements des parois 18 beaucoup plus complexes à mettre en oeuvre, et assurent complémentairement une fonction de guidage du conducteur d'alimentation de la bobine. A ce sujet, la figure 1 montre que chacun des canons 74 est disposé de manière à traverser l'une des ouvertures 12 de l'âme 6a du support écran 6 sans former une excroissance importante pouvant perturber la circulation du fluide de refroidissement.

Il ressort de ce qui précède que le dispositif de refroidissement selon l'invention, se différencie de ceux décrits dans l'art antérieur, par la structure du support écran de l'inducteur et par la structure des moyens organisant le réseau de distribution et de collecte du flux de refroidissement, ces derniers moyens étant agencés pour être de montage facile, pour réduire les épaisseurs et encombrements, pour améliorer les échanges thermiques à débit d'air égal, et conduire à une amélioration du facteur de puissance et du rendement du moteur.

## Revendications

1. Dispositif de refroidissement pour inducteur de moteur linéaire comprenant un noyau axial prismatique (4) entouré par plusieurs bobines (5) qui, formées chacune par des galettes (5a-5b) séparées par des isthmes magnétiques, sont juxtaposées par une de leurs faces à l'âme (6a) d'un support en U constituant écran magnétique, dispositif dans lequel, d'une part, chaque galette (5a-5b) est séparée de chacune de ses voisines par un écarteur (9) formant, avec les isthmes (8) correspondants, un canal de refroidissement annulaire (10) communiquant avec des fentes (12-13) du support écran (6), d'autre part, le support écran (6) forme, avec une enveloppe isolante munie d'ouvertures d'entrée et de sortie du fluide de refroidissement, une cavité divisée par des cloisons (18) en une chambre centrale (19) et deux chambres latérales (20) et, de plus, les ailes (6b) du support écran (6) sont solidaires d'éléments formant radiateurs longés par le fluide de refroidissement, caractérisé en ce que chacun des écarteurs (9a-9b) de galettes est réalisé en matière synthétique moulée, présente une paroi intérieure (30) et une paroi extérieure (32) formant un canal en C fermé communiquant, par des bouches (33-34) ménagées dans sa paroi extérieure et aux extrémités du C, avec les ouvertures (13-12) ménagées dans l'écran support (6), et possède, entre les deux bouches (33-34), une rainure (37) de positionnement de la base d'une barrette longitudinale en matière synthétique (70), tandis que l'âme (6a) du support écran (6) est coiffée, sur son côté tourné vers le noyau axial (4), par un couvercle isolant en matière synthétique (16) muni, d'un côté, de puits (12a-13a) s'engageant dans les ouvertures (12-13) de cette âme et, de l'autre côté, de deux rainures longitudinales (72), parallèles et espacées, pour le positionnement du sommet d'une paire de barrettes (70), et que chacune des barrettes (70), constituant cloison de séparation dans une chambre intermédiaire (35) ménagée entre le couvercle isolant (16) et la bobine (5), est munie, à chacune de ses extrémités, de moyens de positionnement (73) aptes à coopérer avec des moyens complémentaires (62) ménagés dans des flasques (15-15a) en matière synthétique délimitant longitudinalement chaque bobine 5.

2. Dispositif selon la revendication 1, caractérisé en ce que les ailes (6b) du support écran (6) sont tournées à l'opposé du noyau axial (4) et forment, avec deux cloisons (18) parallèles à elles et interposées entre l'âme (6a) du support et une embase isolante (17), opposée à cette âme, la chambre centrale d'arrivée (19) et les deux chambres latérales de sortie (20) du fluide de refroidissement, tandis que les éléments de radiateur associés au support écran (6) sont constitués par des ailettes (25) fixées contre la face interne de chaque aile (6b) du support écran (6), et que les bouches (33-34) de chaque écarteur sont décalées latéralement par rapport à son plan médian (P1), afin d'assurer la communication avec la chambre centrale (19) et l'une des chambres latérales (20), quelle que soit la position donnée à l'écarteur au montage de la bobine.

3. Dispositif selon l'une quelconque des revendications 1 et 2, caractérisé en ce que les parois, respectivement intérieure (30) et extérieure (32), de chaque écarteur (9a-9b) sont munies, en saillie de leurs faces délimitant le canal interne (10) et dans la zone de variation de direction de ce canal, d'excroissances (36) canalisant le fluide et s'opposant à la formation de flux tourbillonnaires localisés.

4. Dispositif selon la revendication 3, caractérisé en ce que la paroi extérieure (32) de l'écarteur (9b) est solidaire d'une nervure extérieure (43) lui donnant une section transversale en T et délimitant des logements de positionnement pour les isthmes magnétiques (8) et les galettes (5a-5b).

5. Dispositif selon l'une quelconque des revendications 1 à 4, caractérisé en ce que les parois, intérieure (30) et extérieure (32), de chaque écarteur (9a-9b) sont munies de têtons (40) de positionnement, de direction longitudinale, aptes à coopérer avec des perçages (42) ménagés dans chaque isthme magnétique (8).

6. Dispositif selon l'une quelconque des revendications 1 à 5, caractérisé en ce que, dans chaque écarteur (9a-9b), la rainure de positionnement (37) de la barrette longitudinale (70) est prolongée, en direction de la paroi intérieure (30) de cet écarteur, par une fente (38) traversant cette paroi intérieure, servant au passage du conducteur de liaison des deux galettes d'une galette double, tandis que l'un des côtés de la paroi intérieure (30) du même écarteur est traversé par une rainure oblique (39), constituant logement pour le conducteur de liaison précité.

7. Dispositif selon l'une quelconque des revendications 1 à 6, caractérisé en ce que l'une des extrémités de la barrette longitudinale (70) est munie d'un canon tubulaire (74), perpendiculaire à la barrette, apte à pénétrer dans l'une des ouvertures centrales (12) du support écran (6) et du couvercle isolant (16) et constituant conduit pour le conducteur de l'une des bornes de la bobine (5).

8. Dispositif selon l'une quelconque des revendications 1 à 7, caractérisé en ce que chaque barrette longitudinale (70) est munie, à chacune de ses extrémités, de saillies latérales (73) formant tenons, aptes à s'encastrer dans l'une des mortaises (62) formées dans chaque flasque (15-15a).

9. Dispositif selon l'une quelconque des revendications 1 à 8, caractérisé en ce que chaque flasque (15-15a) comporte, en saillie de sa face faisant vis à vis à un isthme (8), d'une part, un manchon central (50) de réception du mandrin isolant (14) entourant le noyau (4), d'autre part, et autour de ce manchon, deux nervures, respectivement intérieure (52) et extérieure (53), délimitant un canal en C (54) similaire à celui (10) des écarteurs (9a-9b) et dont les ouvertures, respectivement centrale (56) et latérale (57), débouchent directement dans la chambre intermédiaire (35), de plus, des butées de positionnement intérieures et extérieures de l'isthme (8) correspondant et, enfin, une jupe (58) entourant la bobine sur trois de ses faces et se prolongeant, au-delà de la quatrième face de cette bobine, pour former chape (59) de fixation sur le support écran (6) et son couvercle (16).

10. Dispositif selon l'ensemble des revendications 1, 2 et 9 et l'une quelconque des revendications 3 à 8, caractérisé en ce que l'ensemble support écran (6) et couvercle isolant (16) est commun à plusieurs bobines (5), coopère avec des flasques intermédiaires (15) et avec des flasques d'extrémité (15a), ces derniers étant prolongés au-delà de leur chape par une paroi d'obturation (63) de l'extrémité du support écran (6), et comporte, à ses extrémités, des parties (27) aptes à s'encastrer dans les chapes (59) des flasques d'extrémité (15a) et, dans ses zones de liaison aux flasques intermédiaires (15), des parties (26) aptes à s'encastrer dans les chapes (59) de ces flasques (15), tandis que le couvercle isolant (16) est muni de rainures transversales (76) de positionnement des traverses (60) des flasques (15), rainures constituant, avec ces traverses (60), moyen d'obturation extrême de la chambre intermédiaire (35) associée à chaque bobine (5).

## Patentansprüche

1. Kühlvorrichtung für einen Linearmotorinduktor, wobei der Induktor einen von mehreren Wicklungen (5) umgebenen, axialen, prismatischen Kern (4) umfaßt, welche Wicklungen, von denen jede aus durch Magnetisthmen getrennten Flachspulen (5a-5b) gebildet ist, mit einer ihrer Seiten neben den Kern (6a) eines eine magnetische Abschirmung bildenden U-Trägers gesetzt sind, bei welcher Vorrichtung einerseits jede Flachspule (5a-5b) von jeder ihrer Nachbarspulen durch einen Abstandhalter (9) getrennt ist, der mit den entsprechenden Isthmen (8) einen mit Spalten (12-13) des Abschirmträgers (6) in Verbindung stehenden ringförmigen Kühlkanal bildet, und andererseits der Abschirmträger (6) mit einer Kühlfluideingangs- und -ausgangsöffnungen aufweisenden isolierenden Umhüllung einen Hohlraum bildet, der durch Trennwände (18) in eine Zentralkammer (19) und zwei Seitenkammern (20) unterteilt ist, und die Flügelwände (6b) des Abschirmträgers (6) mit Elementen verbunden sind, welche Kühler bilden, an denen das Kühlfluid entlangfließt,
**dadurch gekennzeichnet**, daß
jeder der Abstandhalter (9a-9b) der Flachspulen aus geformtem Kunststoffmaterial hergestellt ist, eine Innenwand (30) und eine Außenwand (32) aufweist, welche einen Kanal in Gestalt eines geschlossenen C bilden, der über in seiner Außenwand und an den Enden des C angeordnete Mündungen (33-34) mit den in dem Abschirmträger (6) ausgebildeten Öffnungen (13-12) in Verbindung steht, und zwischen den zwei Mündungen (33-34) einen Einschnitt (37) zum Positionieren der Basis eines longitudinalen Stegs (70) aus Kunststoffmaterial aufweist, während der Kern (6a) des Abschirmträgers (6) auf seiner zum axialen Kern (4) hin gerichteten Seite durch eine isolierende Abdeckung (16) aus Kunststoffmaterial überdeckt ist, welche einerseits mit in die Öffnungen (12-13) dieses Kerns eingreifenden Schächten (12a-13a) ausgestattet ist, sowie andererseits mit zwei parallelen und beabstandeten longitudinalen Einschnitten (72) zur Positionierung der Spitze eines Paars von Stegen (70), und daß jeder der in einer zwischen der isolierenden Abdeckung (16) und der Wicklung (5) angeordneten Zwischenkammer (35) eine Trennwand bildenden Stege (70) an jedem seiner Enden Positioniermittel (73) aufweist, welche geeignet sind, mit komplementären Mitteln (62) zusammenzuwirken, welche in jede Wicklung (5) longitudinal begrenzenden Wangen (15-15a) aus Kunststoff ausgebildet sind.

2. Vorrichtung nach Anspruch 1, **dadurch gekennzeichnet,** daß die Flügelwände (6b) des Abschirmträgers (6) zum axialen Kern (4) entgegengesetzt gerichtet sind und mit zwei zueinander parallelen und zwischen den Kern (6a) des Trägers und einer diesem Kern entgegengesetzten isolierenden Basisplatte (17) gesetzten Trennwänden (18) die zentrale Eingangskammer (19) und die zwei seitlichen Ausgangskammern (20) für das Kühlfluid bilden, während die Elemente der dem Abschirmträger (6) zugeordneten Kühler von Flügeln (25) gebildet sind, welche an der inneren Seite jeder Flügelwand (6b) des Abschirmträgers (6) befestigt sind, und daß die Mündungen (33-34) jedes Abstandhalters relativ zu dessen Mittelebene (P1) seitlich verschoben sind, um die Verbindung mit der Zentralkammer (19) und einer der Seitenkammern (20) sicherzustellen, unabhängig von der dem Abstandhalter bei der Montage der Wicklung gegebenen Position.

3. Vorrichtung nach einem der Ansprüchen 1 und 2, **dadurch** **gekennzeichnet,** daß die Innen- bzw. Außenwände (30 bzw. 32) jedes Abstandhalters (9a-9b) von ihren den inneren Kanal (10) begrenzenden Seiten vorstehende und in dem Bereich der Richtungsänderung dieses Kanals angeordnete Ausstülpungen (36) aufweisen, welche das Fluid kanalisieren und der Ausbildung von bereichsweise, verwirbelten Strömungen entgegenwirken.

4. Vorrichtung nach Anspruch 3, **dadurch gekennzeichnet,** daß die Außenwand (32) des Abstandhalters (9b) mit einer äußeren Rippe (43) verbunden ist, welche ihm einen T-förmigen Querschnitt gibt und Positioniersitze für die Magnetisthmen (8) und die Flachspulen (5a-5b) begrenzt.

5. Vorrichtung nach einem der Ansprüche 1 bis 4, **dadurch** **gekennzeichnet,** daß die Innen- und Außenwände (30 und 32) jedes Abstandhalters (9a-9b) Positionieransätze (40) in longitudinaler Richtung aufweisen, welche geeignet sind, mit in jedem Magnetisthmus (8) ausgebildeten Bohrungen (42) zusammenzuwirken.

6. Vorrichtung nach einem der Ansprüche 1 bis 5, **dadurch** **gekennzeichnet**, daß bei jedem Abstandhalter (9a-9b) der Positioniereinschnitt (37) des longitudinalen Stegs (70) in Richtung auf die Innenwand (30) dieses Abstandhalters durch einen Spalt (38) verlängert ist, der durch diese Innenwand geht und als Durchlaß für den Verbindungsleiter der zwei Flachspulen einer Doppelflachspule dient, während eine der Seiten der Innenwand (30) des gleichen Abstandhalters von einem Quereinschnitt (39) durchsetzt ist, welcher eine Aufnahme für den besagten Verbindungsleiter bildet.

7. Vorrichtung nach einem der Ansprüche 1 bis 6, **dadurch** **gekennzeichnet**, daß eines der Enden des longitudinalen Stegs (70) mit einer zum Steg orthogonalen, rohrförmigen Hülseneinheit (74) versehen ist, welche geeignet ist, in eine der zentralen Öffnungen (12) des Abschirmträgers (6) und der isolierenden Abdeckung (16) einzudringen, und eine Führung für den Leiter der einen der Anschlußklemmen der Wicklung (5) bildet.

8. Vorrichtung nach einem der Ansprüche 1 bis 7, **dadurch** **gekennzeichnet**, daß jeder longitudinale Steg (70) an jedem seiner Enden mit seitlichen Vorsprüngen (73) ausgestattet ist, welche Ansätze bilden, die geeignet sind, in einen der in jeder Wange (15-15a) ausgebildeten Ausschnitte (62) eingepaßt zu werden.

9. Vorrichtung nach einem der Ansprüche 1 bis 8, **dadurch** **gekennzeichnet,** daß jede Wange (15-15a) von seiner einem Isthmus (8) gegenüberliegenden Seite vorragend einerseits eine zentrale Hülse (50) zur Aufnahme des den Kern (4) umgebenden, isolierenden Futters (14) umfaßt und andererseits um diese Hülse zwei Rippen, jeweils eine innere (52) und eine äußere (53), welche einen C-förmigen Kanal (54) begrenzen, der demjenigen (10) der Abstandhalter (9a-9b) ähnlich ist und dessen zentrale (56) bzw. seitliche Öffnungen (57) direkt in die Zwischenkammer (35) münden, und darüber hinaus innere und äußere Positionieranschläge des entsprechenden Isthmus (8) und schließlich eine Schürze (58), welche die Wicklung an drei ihrer Seiten umgibt und über der vierten Seite dieser Wicklung verlängert ist, um eine Befestigungsabdeckkappe (59) über dem Abschirmträger (6) und seiner Abdeckung (16) zu bilden.

10. Vorrichtung nach der Gesamtheit der Ansprüche 1,2 und 9 und nach einem der Ansprüchen 3 bis 8, **dadurch gekennzeichnet**, daß die Gesamtheit von Abschirmträger (6) und isolierender Abdeckung (16) mehreren Wicklungen (5) gemeinsam ist, mit Zwischenwangen (15) und mit Endwangen (15a) zusammenwirkt, wobei diese letzteren über ihrer Abdeckkappe durch eine Absperrwand (63) für das Ende des Abschirmträgers (6) verlängert sind, und an ihren Enden zum Einpassen in die Abdeckkappen (59) der Endwangen (15a) geeignete Abschnitte (27) sowie in ihren Verbindungsbereichen mit den Zwischenwangen (15) zum Einpassen in die Abdeckkappen (59) dieser Wangen (15) geeignete Abschnitte (26) aufweist, während die isolierende Abdeckung (16) transversale Positioniereinschnitte (76) für Querleisten (60) der Wangen (15) aufweist, wobei die Einschnitte mit diesen Querleisten (60) ein Absperrmittel bilden, welches außerhalb der jeder Wicklung (5) zugeordneten Zwischenkammer (35) liegt.

## Claims

1. A cooling device for a linear motor inductor including a prismatic axial core (4) surrounded by several coils (5) which, each formed by platens (5a-5b) separated by magnetic links, are juxtaposed at one of their faces with the web (6a) of a U-shaped support constituting a magnetic screen, in which device, on the one hand, each platen (5a-5b) is separated from each adjacent platen by a separator (9) forming, with the corresponding links (8), an annular cooling channel (10) communicating with slots (12-13) of the support screen (6), and on the other hand, the support screen (6) forms, with an insulating casing provided with inlet and outlet openings for the cooling fluid, a cavity divided by partitions (18) into a central chamber (19) and two lateral chambers (20) and, furthermore, the wings (6b) of the support screen (6) are connected to elements forming radiators through which the cooling fluid passes, characterised in that each of the platen separators (9a-9b) is made of moulded synthetic material, has an internal wall (3) and an external wall (32) forming a C-shaped closed channel communicating, through openings (33-34) formed in its external wall and at the ends of the C, with the openings (13-12) formed in the support screen (6), and has, between the two openings (33-34), a groove (37) for positioning the base of a longitudinal bar (70) of synthetic material, whilst the web (6a) of the support screen (6) is covered, on its side turned towards the axial core (4), by an insulating cover (16) of synthetic material provided, on the one hand, with tubes (12a-13a) engaging in the openings (12-13) of this web and, on the other hand, with two parallel spaced longitudinal grooves (72) for positioning the extremities of a pair of bars (70), and that each of the bars (70), constituting a separating partition in an intermediate chamber (35) formed between the insulating cover (16) and the coil (5), is provided, at each of its ends, with positioning means (73) adapted to cooperate with complementary means (62) formed in side plates (15-15a) of synthetic material longitudinally delimiting each coil (5).

2. A device according to Claim 1, characterised in that the wings (6b) of the support screen (6) are turned oppositely to the axial core (4) and form, with two partitions (18) parallel to them and interposed between the web (6a) of the support and an insulating base (17) opposed to the web, the central inlet chamber (19) and the two lateral outlet chambers (20) for the cooling fluid, whilst the radiator elements associated with the support screen (6) are constituted by fins (25) fixed against the internal face of each wing (6b) of the support screen (6), and that the openings (33-34) of each separator are laterally offset with respect to its median plane (P1), in order to ensure communication with the central chamber (19) and one of the lateral chambers (20), whatever the position given to the separator when the coil is assembled.

3. A device according to either of Claims 1 and 2, characterised in that the walls, respectively internal (30) and external (32), of each separator (9a-9b) are provided with protuberances (36) projecting from their faces delimiting the internal channel (19) and in the region of directional variation of this channel, said protuberances channeling the fluid and discouraging the formation of localised eddy flows.

4. A device according to Claim 3, characterised in that the external wall (32) of the separator (9b) is connected to an external rib (43) which gives it a T-shaped transverse section and delimits positioning recesses for the magnetic links (8) and the platens (5a-5b).

5. A device according to any one of Claims 1 to 4, characterised in that the walls, internal (30) and external (32), of each separator (9a-9b) are provided with longitudinally directed positioning projections (40), adapted to cooperate with pierced holes (42) formed in each magnetic link (8).

6. A device according to any one of Claims 1 to 5, characterised in that, in each separator (9a-9b), the positioning groove (37) of the longitudinal bar (70) is extended in the direction of the internal wall (30) of this separator by a slot (38) passing through this internal wall, serving for the passage of the conductor connecting the two platens of a double platen, whilst an oblique slot (39), constituting a housing for the aforementioned connecting conductor, passes through one of the sides of the internal wall (30) of the same separator.

7. A device according to any one of Claims 1 to 6, characterised in that one of the ends of the longitudinal bar (70) is provided with a tubular connector (74), perpendicular to the bar, adapted to enter one of the central openings (12) in the support screen (6) and in the insulating cover (16) and constituting a conduit for the conductor of one of the terminals of the coil (5).

8. A device according to any one of Claims 1 to 7, characterised in that each longitudinal bar (70) is provided, at each of its ends, with lateral projections (73) forming tenons adapted to fit into one of the recesses (62) formed in each side plate (15-15a).

9. A device according to any one of Claims 1 to 8, characterised in that each side plate (15-15a) has, projecting from its face opposite to a link (8), on the one hand, a central sleeve (50) for receiving the insulating former (14) surrounding the core (4), and on the other hand, around this sleeve, two ribs, respectively internal (52) and external (53), delimiting a C-shaped channel (54) similar to the channel (10) of the separators (9a-9b) and of which the openings, respectively central (56) and lateral (57) open directly into the intermediate chamber (35), in addition, internal and external positioning abutments for the corresponding link (8) and, finally, a skirt (58) surrounding the coil on three of its faces and extending beyond the fourth face of the coil to form a lug (59) for fixing on the support screen (6) and its cover (16).

10. A device according to all of Claims 1, 2 and 9 and any one of Claims 3 to 8, characterised in that the assembly formed by the support screen (6) and insulating cover (16) is common to several coils (5), cooperates with intermediate flanges (15) and with end flanges (15a), these latter being extended beyond their lug by a wall (63) for closing the end of the support screen (6), and has, at its ends, elements (27) adapted to fit with the lugs (59) of the end flanges (15a) and, in the regions where it is connected to the intermediate flanges (15), elements (26) adapted to fit with the lugs (59) of these flanges (15), whilst the insulating cover (16) is provided with transverse grooves (76) for positioning the cross-members (60) of the flanges (15), which grooves constitute, with these cross-members (60), end closure means for the intermediate chamber (35) associated with each coil (5).
